Europäisches Patentamt

European Patent Office

Office européen des brevets

(19)

(11) EP 0 845 849 A2

(12) EUROPÄISCHE PATENTANMELDUNG

(43) Veröffentlichungstag:
03.06.1998 Patentblatt 1998/23

(51) Int. Cl.⁶: $H02J\ 3/00$

(21) Anmeldenummer: 97118585.5

(22) Anmeldetag: 25.10.1997

(84) Benannte Vertragsstaaten:
AT BE CH DE DK ES FI FR GB GR IE IT LI LU MC NL PT SE

(30) Priorität: 30.10.1996 DE 19645002

(71) Anmelder: ABB Research Ltd.
8050 Zürich (CH)

(72) Erfinder:
• Paschen, Rolf, Prof. Dr.
76669 Bad Schönborn (DE)

• Gräber, Norbert
69198 Schriesheim (DE)
• Fitterer, Gerd
68229 Mannheim (DE)
• Böhme, Helmut, Prof. Dr.
69226 Nussloch (DE)

(74) Vertreter:
Rupprecht, Klaus, Dipl.-Ing. et al
c/o ABB Patent GmbH,
Postfach 10 03 51
68128 Mannheim (DE)

(54) Freileitung zur Elektroenergieübertragung

(57) Es wird eine Freileitung zur Elektroenergieübertragung mit mindestens einer zusätzlichen Kompensationsschleife (1) vorgeschlagen, wobei mindestens ein Leiter (7) dieser Schleife parallel und in der Nähe des erdnächsten Phasenleiters angeordnet ist. In diese mindestens eine Kompensationsschleife (1) wird ein Kompensationsstrom ($I_{komp}$) eingespeist, dessen Phasenlage und Amplitude derart bezüglich der Phasenlage und der Amplitude des im Phasenleiter (L1, L2, L3) fließenden Phasenstromes ($i_R$, $i_S$, $i_T$) eingestellt ist, daß der hierdurch erzeugte Magnetfluß dem vom Phasenstrom erzeugten Magnetfluß entgegenwirkt und damit die magnetische Induktion reduziert. Der Kompensationsstrom ($I_{komp}$) wird mittels einer regelbaren Stromquelle (3) für Betrag und Phasenlage erzeugt, welche von einer Regeleinrichtung (5) ansteuerbar ist, die mit einer Magnetfeld-Meßeinrichtung (6) zur Erfassung des Magnetfeldes unter der Freileitung verbunden ist.

Fig.1

EP 0 845 849 A2

Printed by Xerox (UK) Business Services
2.16.3/3.4

**Beschreibung**

Die Erfindung bezieht sich auf eine Freileitung zur Elektroenergieübertragung mit drei vertikal übereinander oder horizontal nebeneinander angeordneten Phasenleitern eines Drehstromsystems.

In der Umgebung von Freileitungen wird - bedingt durch die Übertragungsströme - unvermeidlich ein Magnetfeld erzeugt. Es ist unter anderem durch den Effektivwert seiner magnetischen Induktion gekennzeichnet.

Um schädliche Wechselwirkungen dieses Magnetfeldes mit der menschlichen Gesundheit zu vermeiden, sollte es an Orten, die nicht nur zum vorübergehenden Aufenthalt von Menschen bestimmt sind, möglichst niedrig sein und darf in Empfehlungen vereinbarte und/oder festgesetzte gesetzliche Grenzwerte keinesfalls überschreiten.

Der Erfindung liegt die Aufgabe zugrunde, eine Freileitung zur Elektroenergieübertragung anzugeben, die im Bereich unterhalb der Leiter und in der Nähe der Erdoberkante, vorzugsweise bis zu einer Höhe von 2 bis 3 m über der Oberfläche, ein wesentlich reduziertes Magnetfeld erzeugt.

Diese Aufgabe wird bei einem Freileitung zur Elektroenergieübertragung mit drei vertikal übereinander angeordneten Phasenleitern eines Drehstromsystems dadurch gelöst, daß die Phasenleiter von mindestens einer zusätzlichen Kompensationsschleife umschlossen werden und ein erster Leiter dieser Kompensationsschleife parallel über dem oberen Phasenleiter und ein zweiter Leiter der Kompensationsschleife parallel unter dem unteren Phasenleiter angeordnet sind, wobei erster und zweiter Leiter über seitliche, vertikale Verbindungsleiter miteinander verbunden sind und daß in diese mindestens eine Kompensationsschleife ein Kompensationsstrom eingespeist wird, dessen Phasenlage und Amplitude derart bezüglich der Phasenlage und der Amplitude des im Phasenleiter fließenden Phasenstromes eingestellt ist, daß der hierdurch erzeugte Magnetfluß dem vom Phasenstrom erzeugten Magnetfluß entgegenwirkt, wobei der Kompensationsstrom mittels einer regelbaren Stromquelle für Betrag und Phasenlage erzeugt wird, welche von einer Regeleinrichtung ansteuerbar ist, die mit einer Magnetfeld-Meßeinrichtung zur Erfassung des Magnetfeldes unter der Freileitung verbunden ist.

Diese Aufgabe wird bei einer Freileitung zur Elektroenergieübertragung mit drei horizontal nebeneinander angeordneten Phasenleitern eines Drehstromsystems dadurch gelöst, daß die Phasenleiter von mindestens einer zusätzlichen Kompensationsschleife umschlossen werden und ein erster Leiter dieser Kompensationsschleife parallel neben dem ersten äußeren Phasenleiter und ein zweiter Leiter der Kompensationsschleife parallel neben dem zweiten äußeren Phasenleiter angeordnet sind, wobei erster und zweiter Leiter über seitliche Verbindungsleiter miteinander verbunden sind und daß in diese mindestens eine Kompensationsschleife ein Kompensationsstrom eingespeist wird, dessen Phasenlage und Amplitude derart bezüglich der Phasenlage und der Amplitude des im Phasenleiter fließenden Phasenstromes eingestellt ist, daß der hierdurch erzeugte Magnetfluß dem vom Phasenstrom erzeugten Magnetfluß entgegenwirkt, wobei der Kompensationsstrom mittels einer regelbaren Stromquelle für Betrag und Phasenlage erzeugt wird, welche von einer Regeleinrichtung ansteuerbar ist, die mit einer Magnetfeld-Meßeinrichtung zur Erfassung des Magnetfeldes unter der Freileitung verbunden ist.

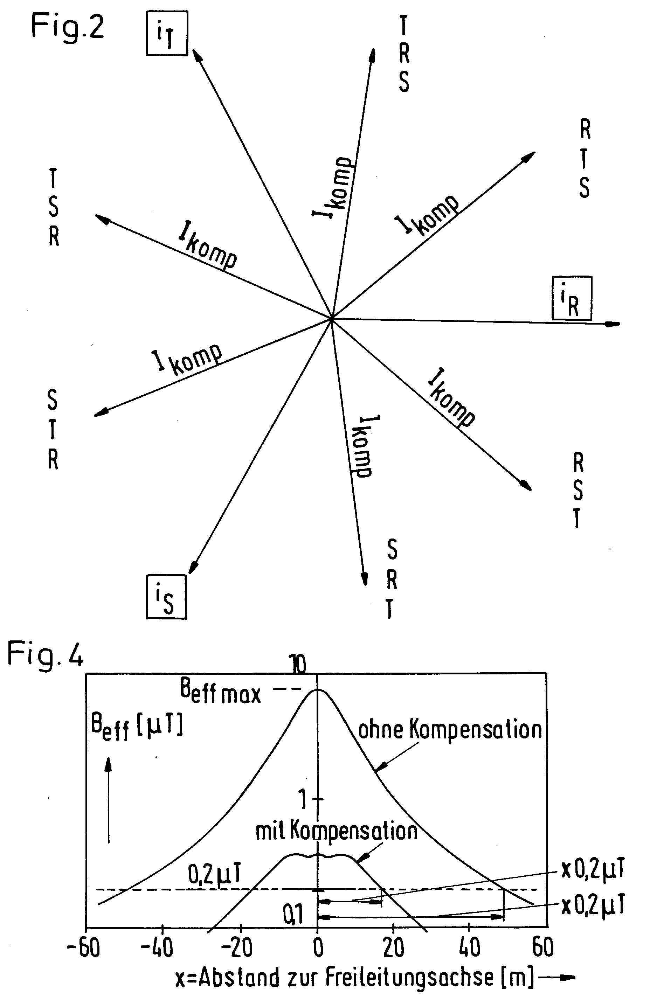

Die mit der Erfindung erzielbaren Vorteile bestehen insbesondere darin, daß sowohl das Maximum des Effektivwertes der magnetischen Induktion $B_{effmax}$ im Bereich bis 2 bis 3 m Höhe über dem Erdboden als auch der Abstand $x_{0,2\ \mu T}$ zu der Freileitungsachse, bei dem der Effektivwert der magnetischen Induktion in 2 m Höhe über der Erdoberkante den Wert von 0,2 $\mu T$ erreicht und für größere Abstände unterschreitet, extrem reduziert werden (siehe hierzu auch Fig. 4). Die Magnetfelder in diesem Bereich 2 bis 3 m oberhalb der Erdoberkante können bis auf weniger als 10% im V ergleich zur unkompensierten, herkömmlichen Freileitung reduziert werden. Dies hat seine Ursache darin, daß Kompensationsschleife (insbesondere Phase und Amplitude des Kompensationsstromes) und Freileitung hinsichtlich der magnetischen Kopplung aufeinander abgestimmt sind, d. h. Kompensationsschleife und Freileitung werden als geometrische und elektrische Einheit betrachtet. In die mindestens eine Kompensationsschleife wird ein Kompensationsstrom eingespeist, dessen Phasenlage und Amplitude derart bezüglich der Phasenlage und der Amplitude des im Phasenleiter fließenden Phasenstromes eingestellt ist, daR der hierdurch erzeugte Magnetfluß dem vom Phasenstrom erzeugten Magnetfluß entgegenwirkt und damit die magnetische Induktion reduziert.

Die Erfindung wird nachstehend an Hand der in der Zeichnung dargestellten Ausführungsformen erläutert. Es zeigen:

Fig. 1     die Grundanordnung einer magnetfeldreduzierten Freileitung,

Fig. 2     die prinzipielle Phasenlage der Kompensationsströme im unteren Leiter der Kompensationsschleife bei den möglichen Phasenfolgen der Leiterströme und übereinander bzw. nebeneinander angeordneten Leitern,

Fig. 3     die mögliche Lage einer Kompensationsschleife bei nebeneinander angeordneten Phasenleitern,

Fig. 4     die Abhängigkeit der magnetischen Induktion unterhalb einer Freileitung vom Abstand zur Leitungsachse.

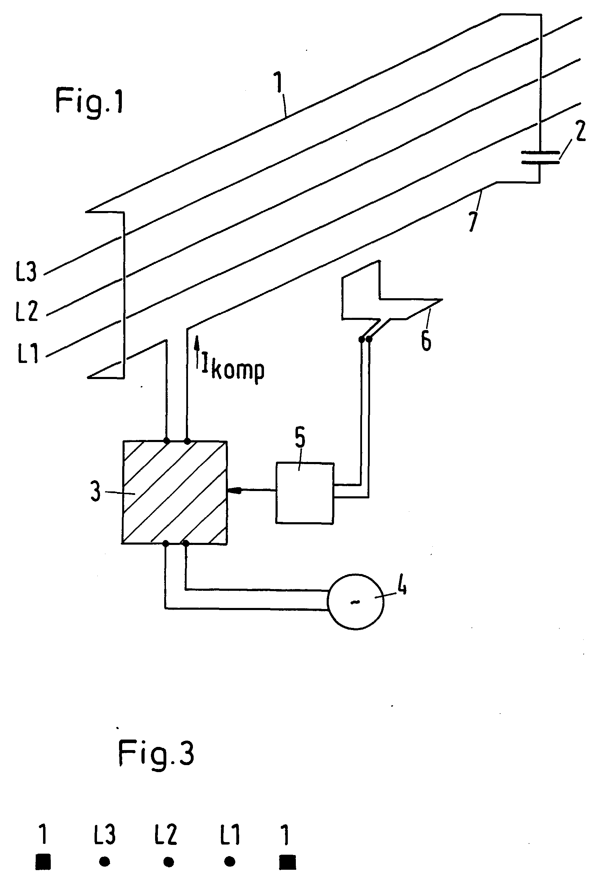

In Fig. 1 ist die Grundanordnung einer magnetfeldreduzierten Freileitung in perspektivischer Ansicht dargestellt. Es sind drei übereinander angeordnete Phasenleiter L1, L2, L3 eines Drehstromsystems (mit drei je 120° phasenverschobenen Strömen, wobei Phasenwinkel $\varphi(iR) = 0°$, Phasenwinkel $\varphi(iS) = -120°$, Phasenwinkel $\varphi(iT) = -240°$) zu erkennen, wobei die drei Phasenleiter von einer Kompensationsschleife 1 umschlossen werden. Der obere Leiter (nachfolgend auch als erster Leiter bezeichnet) der Kompensationsschleife 1 verläuft oberhalb des oberen Phasenleiters L3 und der untere Leiter 7 (nachfolgend auch als zweiter Leiter bezeichnet) der Kompensationsschleife 1 verläuft unterhalb des unteren Phasenleiters L1. Über seitliche, vertikale Verbindungsleiter werden oberer und unterer Leiter respektive erster und zweiter Leiter der Kompensationsschleife miteinander verbunden.

Zur Reduktion des unterhalb der Freileitung im Bereich der Erdoberfläche auftretenden Magnetfelds wird ein Kompensationsstrom $I_{komp}$ in die Kompensationsschleife 1 eingespeist. Dieser Kompensationsstrom $I_{komp}$ wird durch eine regelbare Stromquelle 3 erzeugt, der an ein Netz 4, beispielsweise an ein Niederspannungsnetz, angeschlossen ist. Eine Regeleinrichtung 5 dient zur präzisen Einstellung der Amplitude und Phasenlage des Kompensationsstromes $I_{komp}$. Diese Regeleinrichtung 5 empfängt Istwerte einer Magnetfeld-Meßeinrichtung 6, welche permanent das Magnetfeld unterhalb der Freileitung - und zwar sowohl in horizontaler als auch vertikaler Lage - erfaßt.

Amplitude und Phasenlage des Kompensationsstromes $I_{komp}$ werden mittels regelbarer Stromquelle 3/Regeleinrichtung 5 in Abhängigkeit von der zeitlich veränderten Leistungsbelastung der Freileitung stets derart eingestellt, daß das durch die Magnetfeld-Meßeinrichtung 6 in vertikaler und horizontaler Richtung erfaßte Magnetfeld minimal wird.

Das durch den Kompensationsstrom $I_{komp}$ erzeugte Magnetfeld überlagert das von den Phasenleitern L1, L2, L3 erzeugte Magnetfeld derart kompensierend, daß das Magnetfeld zwischen der Erdoberfläche und einer Höhe von 2 bis 3 m sehr stark reduziert ist. Die erforderliche Phasenlage des Kompensationsstromes $I_{komp}$ ist davon abhängig, welche der möglichen Phasenfolgen konkret vorliegt. Beispielsweise sind bei einem Drehstromsystem mit übereinander angeordneten Leitern sechs verschiedene Phasenfolgen einsetzbar, nämlich L1 = R , L2 = S , L3 = T (kurz mit R S T bezeichnet) oder L1 = R , L2 = T , L3 = S (kurz mit R T S bezeichnet) oder L1 = T , L2 = R , L3 = S (kurz mit T R S bezeichnet) oder L1 = T , L2 = S , L3 = R (kurz: mit T S R bezeichnet) oder L1 = S , L2 = T , L3 = R (kurz mit S T R bezeichnet) oder L1 = S , L2 = R , L3 = T (kurz mit S R T bezeichnet).

Fig. 2 zeigt zur Darstellung der Phasenlage die prinzipielle erforderliche Lage der Zeiger der Kompensationsströme $I_{komp}$ für maximale Reduktion des Magnetfeldes bei übereinander angeordneten Phasenleitern und den vorstehend bezeichneten möglichen Phasenfolgen. Die Lage der Zeiger der Phasenströme $i_R$, $i_S$, $i_T$ ist gekennzeichnet. Wie zu erkennen ist, sind die für eine optimale Magnetfeldreduktion erforderlichen Phasenlagen der Kompensationsströme $I_{komp}$ ungefähr in Gegenphase zur jeweils untersten, d. h. der Erdoberfläche am nähesten liegenden Phase. Diese erforderlichen Phasenlagen der Kompensationsströme $I_{komp}$ sowie die erforderlichen Amplituden werden unter Beachtung der Wirk- und Blindwiderstände der Strombahn und der konkret vorliegenden Anordnung (Geometrie) der Phasenleiter L1, L2, L3 und der Kompensationsschleife 1 sowie der Amplituden der Phasenströme $i_R$, $i_S$, $i_T$ mittels regelbarer Stromquelle 3/Regeleinrichtung 5 eingestellt.

Bei richtiger Phasenlage und Amplitude des in die Kompensationsschleife 1 eingespeisten Kompensationsstromes $I_{komp}$ ergibt sich eine sehr starke Reduktion des Effektivwertes der Induktion, so daß $B_{effmax}$ und $x_{0,2\ \mu T}$ wie gewünscht sehr stark verkleinert werden. Beispielsweise beträgt die Stromstärke des Kompensationsstromes ungefähr 40% vom Phasenstrom.

Selbstverständlich ist es auch möglich, die Freileitung in drei, vier oder mehr Abschnitte mit mehreren Kompensationsschleifen zu unterteilen. Wichtig ist dabei das Wissen, in welchen Abschnitten dem Freileitung eine extreme Reduktion des Magnetfeldes erforderlich ist und in welchen Abschnitten dies nicht notwendig ist.

Der in der Kompensationsschleife 1 angeordnete Reihenkondensator 2 kompensiert den induktiven Spannungsabfall in der Kompensationsschleife 1 und bewirkt sowohl eine gewünschte Phasendrehung des Kompensationsstromes in die erforderliche Phasenlage als auch eine angepaßte Schleifenimpedanz. Der Reihenkondensator 2 ist jedoch nicht zwingend erforderlich.

Die vorstehenden Betrachtungen beziehen sich beispielhaft auf das Ausführungsbeispiel mit drei vertikal übereinander angeordneten Phasenleitern, da bei dieser Phasenleiter-Anordnung die größte Magnetfeldreduktion erzielt wird. Die erfinderische Idee läßt sich jedoch auch bei horizontal nebeneinander angeordneten Phasenleitern realisieren. In Fig. 3 ist die entsprechenden Anordnung skizziert. Die Lage der Leiter der Kompensationsschleife 1 ist angedeutet. Die Wirkung der erfindungsgemäß vorgeschlagenen Maßnahmen ist jedoch - wie bereits angedeutet - bei horizontal nebeneinander angeordneten Phasenleitern nicht so groß wie bei vertikal übereinander angeordneten Phasenleitern. Dies ist darin begründet, daß bei vertikal untereinander angeordneten Phasenleitern das Magnetfeld unterhalb der Freileitung linear polarisiert ist, was die Kompensation begünstigt.

In Fig. 4 ist beispielhaft die Abhängigkeit der magnetischen Induktion unterhalb einer Freileitung vom Abstand zur Leitungsachse gezeigt, und zwar beispielhaft für eine Höhe von 2 m über der Erdoberfläche (Magnetfeldprofil mit und ohne Kompensation). Beim Punkt x = 0 m verläuft die senkrecht auf der Erdoberfläche stehende Leitungsachse der Freileitung. Der Effektivwert der Induktion $B_{eff}$ weist ohne Kompensation bei x = 0 m sein Maximum $B_{effmax}$ von ungefähr 10 μT auf und verringert sich zu beiden Seiten von x = 0 m aus. Bei den Abständen x = +47 m und x = -47 m zur Leitungsachse erreicht $B_{eff}$ den das Magnetfeld kennzeichnenden Wert 0,2 μT, d. h. der Wert $x_{0,2\ \mu T}$ beträgt 47 m. Mit Kompensation ist der Wert $x_{0,2\ \mu T}$ vorteilhaft auf ungefähr 17 m reduziert.

**Patentansprüche**

1. Freileitung zur Elektroenergieübertragung mit drei vertikal übereinander angeordneten Phasenleitern (L1, L2, L3) eines Drehstromsystems, wobei die Phasenleiter von mindestens einer zusätzlichen Kompensationsschleife umschlossen werden und ein erster Leiter dieser Kompensationsschleife (1) parallel über dem oberen Phasenleiter und ein zweiter Leiter der Kompensationsschleife parallel unter dem unteren Phasenleiter angeordnet sind und erster und zweiter Leiter über seitliche, vertikale Verbindungsleiter miteinander verbunden sind und wobei in diese mindestens eine Kompensationsschleife (1) ein Kompensationsstrom ($I_{komp}$) eingespeist wird, dessen Phasenlage und Amplitude derart bezüglich der Phasenlage und der Amplitude des im Phasenleiter (L1, L2, L3) fließenden Phasenstromes ($i_R$, $i_S$, $i_T$) eingestellt ist, daß der hierdurch erzeugte Magnetfluß dem vom Phasenstrom erzeugten Magnetfluß entgegenwirkt, wobei der Kompensationsstrom ($I_{komp}$) mittels einer regelbaren Stromquelle (3) für Betrag und Phasenlage erzeugt wird, welche von einer Regeleinrichtung (5) ansteuerbar ist, die mit einer Magnetfeld-Meßeinrichtung (6) zur Erfassung des Magnetfeldes unter der Freileitung verbunden ist.

2. Freileitung zur Elektroenergieübertragung mit drei horizontal nebeneinander angeordneten Phasenleitern (L1, L2, L3) eines Drehstromsystems, wobei die Phasenleiter von mindestens einer zusätzlichen Kompensationsschleife umschlossen werden und ein erster Leiter dieser Kompensationsschleife (1) parallel neben dem ersten äußeren Phasenleiter und ein zweiter Leiter der Kompensationsschleife parallel neben dem zweiten äußeren Phasenleiter angeordnet sind und erster und zweiter Leiter über seitliche Verbindungsleiter miteinander verbunden sind und wobei in diese mindestens eine Kompensationsschleife (1) ein Kompensationsstrom ($I_{komp}$) eingespeist wird, dessen Phasenlage und Amplitude derart bezüglich der Phasenlage und der Amplitude des im Phasenleiter (L1, L2, L3) fließenden Phasenstromes ($i_R$, $i_S$, $i_T$) eingestellt ist, daß der hierdurch erzeugte Magnetfluß dem vom Phasenstrom erzeugten Magnetfluß entgegenwirkt, wobei der Kompensationsstrom ($I_{komp}$) mittels einer regelbaren Stromquelle (3) für Betrag und Phasenlage erzeugt wird, welche von einer Regeleinrichtung (5) ansteuerbar ist, die mit einer Magnetfeld-Meßeinrichtung (6) zur Erfassung des Magnetfeldes unter der Freileitung verbunden ist.

3. Freileitung nach Anspruch 1 oder 2, dadurch gekennzeichnet, daß ein Reihenkondensator (4) in der Kompensationsschleife (1) angeordnet ist.

Fig.1

1

2

7

L3

L2

L1

$I_{komp}$

6

5

3

4

Fig.3

1   L3   L2   L1   1

Fig.2

Fig.4

x=Abstand zur Freileitungsachse [m] ⟶